# EUROPÄISCHE PATENTSCHRIFT

(11) **EP 2 542 863 B1**
(45) Veröffentlichungstag und Bekanntmachung des Hinweises auf die Patenterteilung: **28.05.2014**
(21) Anmeldenummer: 11702576.7
(22) Anmeldetag: 20.01.2011
(51) Int. Cl.: G01D 1/18, B60J 7/057, E05F 15/16, G05B 19/401

(54) **VERFAHREN ZUR BESTIMMUNG DER STELLPOSITION EINES VERSTELLTEILS**
METHOD FOR DETERMINING THE SET POSITION OF AN ADJUSTMENT PART
PROCÉDÉ POUR DÉTERMINER LA POSITION DE RÉGLAGE D'UNE PIÈCE RÉGLABLE

(30) Priorität: 02.03.2010 DE 102010009821
(43) Veröffentlichungstag der Anmeldung: 09.01.2013
(73) Patentinhaber: Brose Fahrzeugteile GmbH & Co., 96103 Hallstadt (DE)
(72) Erfinder: VETTER, Christian, 96114 Hirschaid (DE)
(74) Vertreter: Freier, Rüdiger
(86) Internationale Anmeldenummer: PCT/EP2011/000230
(87) Internationale Veröffentlichungsnummer: WO 2011/107185

(56) Entgegenhaltungen:
- DE-A1- 19 527 456
- DE-A1- 19 838 293
- DE-A1-102006 043 839
- DE-C1- 19 916 400

## Beschreibung

Die Erfindung bezieht sich auf ein Verfahren zur Bestimmung der Stellposition eines motorisch angetriebenen Verstellteils eines Kraftfahrzeugs mittels eines Hallsensors, der in einem infolge einer Motordrehung drehbewegteri Magnetfeld angeordnet ist, wobei der Antrieb des Verstellteils für eine vorgegebene Anzahl von Annäherungen des Verstellteils an eine Endposition angesteuert wird, wobei ein Zähler bei jeder Annäherung des Verstellteils an die Endposition um einen Zählwert geändert wird, und wobei bei Erreichen der vorgegebenen Anzahl der Annäherungen eine Normierungsfahrt in die Endposition durchgeführt wird. Sie bezieht sich weiter auf ein nach diesem Verfahren arbeitendes Verstellsystem.

Bei einem modernen Kraftfahrzeug sind üblicherweise eine Vielzahl von mittels Elektromotoren angetriebenen Stelleinrichtungen oder Verstellteilen (Verstellelementen) vorhanden. Hierbei handelt es sich beispielsweise um einen elektrischen Fensterheber oder ein Schiebedach. Während eines Stellvorgangs eines solchen Verstellteils ist eine gewünschte Endposition präzise anzufahren, wozu eine genaue Kenntnis der Stellposition des Verstellelementes erforderlich ist. Die Kenntnisse der aktuellen Stellposition oder hieraus ableitbarer Größen, wie der Stellgeschwindigkeit oder des zurückgelegten Verstellwegs, sind darüber hinaus häufig auch für die sichere Erkennung eines Einklemmfalls erforderlich.

Zur möglichst genauen Erfassung der Stellposition einer Fensterscheibe ist es beispielsweise aus der DE 199 16 400 C1 bekannt, einen Stellungs- und Drehrichtungssensor vorzusehen. Dieser besteht im Wesentlichen aus zwei in einem Abstand oder Winkel versetzt zueinander angeordneten Hallsensoren oder einem zwei Hallsonden (sensitive Flächen) aufweisenden Hallsensor (Hall-IC) und einem mehrpoligen, beispielsweise zwei- oder vierpoligen Ringmagneten, der auf der Antriebswelle des Elektromotors angeordnet ist. Der Hallsensor erfasst eine Magnetfeldänderung infolge einer Rotation des mit der Antriebswelle fest verbundenen Ringmagneten und generiert hieraus Zählimpulse. Diese werden zusammen mit einer Information über die Drehrichtung des Ringmagneten und damit des Elektromotors ausgewertet, indem die Zählimpulse je nach Drehrichtung des Antriebs aufwärts oder abwärts gezählt werden und somit die jeweilige Stellung der Fensterscheibe angeben.

Aus der DE 10 2006 043 839 A1 ist es bekannt, die an den Hallsonden oder Hallsensoren auftretenden Magnetfeldänderungen einer Komparatorschaltung mit Hysterese (Schmitt-Trigger-Schaltung) in zwei um beispielsweise 90° zueinander versetzte binäre Impulsfolgen umzusetzen. Bei einer solchen Komparatorschaltung mit Hysterese werden eine obere Schaltschwelle und eine untere Schaltschwelle bereitgestellt. Durch Zählen der Impulse pro Zeiteinheit soweit durch einen Vergleich der beiden Impulsfolgen kann die Motor- bzw. Antriebsdrehzahl und somit die Position des Verstellteils sowie die Drehrichtung des Elektromotors oder Drehantriebs bestimmt werden.

Bei Verstellsystemen mit zwei Endpositionen (offen und geschlossen), wie insbesondere bei einem Fensterheberantrieb, wird zunächst im Rahmen einer ersten Lern- oder Normierfahrt zumindest eine der Endpositionen direkt angefahren und in dieser Position der Zählwert eines Zählers auf einen bestimmten Wert, insbesondere auf Null gesetzt. Während des Anfahrens der anderen Endposition infolge einer Ansteuerung des Antriebs- bzw. Elektromotors in Gegenrichtung generiert der Hallsensor eine Anzahl von Zählimpulsen, die einen Positionszähler beispielsweise inkrementieren, wobei bei Erreichen der anderen Endposition der aktuelle Zählerstand dieser Endposition zugeordnet und beispielsweise gespeichert wird. Somit ist jeder Position des angetriebenen Verstellteils entlang des Verstellweges zwischen den beiden Endpositionen ein Zählwert des Positionszählers zugeordnet. Bei nachfolgend vorgenommenen Anfahrten dieser Endposition, insbesondere der Schließposition (Annäherungszyklen), wird der Antrieb bereits kurz vor Erreichen des normierten Zählerwertes gestoppt, um im Normalbetrieb zur Lebensdauererhöhung allein aufgrund der Massenträgheit des Systems so genannte Sanfteinläufe des Verstellelementes in den auch als Fangbereich oder Dichtungseinlauf bezeichneten Endanschlag durchzuführen.

Um während des bestimmungsgemäßen Gebrauchs eintretende Änderungen der Verstellsystems, z. B. der Endposition zu berücksichtigen und hierzu das Verstellsystem nachzujustieren, ist es aus der DE 195 27 456 B4 bekannt, im Anschluss an eine vorgegebene Anzahl von Annäherungszyklen die Endposition in einer Normierungsfahrt ohne Sanfteinlauf anzufahren und den Zähler zum Zwecke der Normierung wiederum auf den bestimmten Wert, beispielsweise erneut auf Null zu setzten. Dabei ist eine feste Anzahl von Annäherungen vorgegeben, nach denen jeweils eine Normierungsfahrt erfolgt.

Aus der DE 198 38 293 A1 ist es darüber hinaus bekannt, anstelle einer fest vorgegebenen Anzahl von Annäherungszyklen die Zyklenanzahl variabel zu gestalten und hierzu im Anschluss an jede Normierungsfahrt eine Zufallszahl für die folgenden Anfahrzyklen zu generieren, woraufhin die nächste Normierungsfahrt erfolgen wird. Durch die Generierung der Zufallszahl, die bei jedem Annäherungszyklus des zu positionierenden Verstellteils bis zum vorgegebenen Zählwert dekrementiert wird, der eine Normierungsfahrt auslöst, soll der Verschleiß des Systems verringert und die Lebensdauer erhöht werden.

Der Erfindung liegt die Aufgabe zugrunde, ein hinsichtlich der Positionsgenauigkeit und Lebensdauer des Verstellteils möglichst optimiertes Verfahren zur Bestimmung der Stellposition eines motorisch angetriebenen Verstellteils eines Kraftfahrzeugs anzugeben. Des Weiteren soll ein hierzu besonders geeignetes Verstellsystem angegeben werden.

Bezüglich des Verfahrens wird diese Aufgabe erfindungsgemäß gelöst durch die Merkmale des Anspruchs 1. Vorteilhafte Weiterbildungen und Varianten sind Gegenstand der hierauf rückbezogenen Unteransprüche.

Dazu wird ein Zähler bei jeder Annäherung des Verstellteils an eine Endposition, insbesondere an die Schließposition, um einen Zählwert geändert, insbesondere dekrementiert. Ist ein die vorgegebene Anzahl der Annäherungen des Verstellteils an die Endposition bestimmender Annäherungs- oder Normierungswert erreicht, so wird eine Normierungsfahrt durchgeführt, indem das Verstellteil ohne vorherige Abschaltung des Antriebs in die Endposition gesteuert wird. Anschließend wird der Zähler auf den oder einen anderen vorgegebenen Start- bzw. Normierungswert (Anfangswert) zurückgesetzt. Dabei erfolgt die Änderung des Zählers zusätzlich in Abhängigkeit von der Anzahl von Deaktivierungs- bzw. Aktivierungszyklen des Hallsensors, wozu jede Deaktivierung bzw. Aktivierung des Hallsensors erfasst wird und den Zähler um jeweils einen Zählwert ändert.

Die Erfindung geht dabei von der Überlegung aus, dass die Anzahl der erforderlichen Normierungsfahrten optimiert werden kann, wenn diese in möglichst zuverlässiger und dabei Ressourcen sparender Art und Weise an die betriebsbedingten bzw. benutzerspezifischen Gegebenheiten des Verstellsystems individuell und automatisch angepasst werden. Die spezifischen Gegebenheiten können dabei abgebildet werden durch im Verstellsystem vorhandene bzw. in der diesem zugeordneten Elektronik bereits enthaltene Informationen. Hierzu besonders geeignet ist die benutzerspezifisch unterschiedliche Anzahl der Deaktivierungen und Aktivierungen des Hallsensors, d.h. die Anzahl der sogenannten "Sleep- und Wake-up-Zyklen" in Folge des Ein- und Ausschaltens des Fahrzeugs bzw. der Steuerelektronik des Verstellsystems und damit der Energieversorgung des Hallsensors.

Die Erfindung geht dabei von der Erkenntnis aus, dass bei der Verwendung eines Hallsensors, bei dem ein Pegelwechsel beim Überschreiten der oberen Schaltschwelle und beim Unterschreiten der unteren Schaltschwelle erfolgt und inner-halb der Hysterese ein bestimmter Pegel, beispielsweise ein High-Pegel vorgegeben ist, Zustände eintreten können, die zu einem Verzählen führen. Die Gefahr eines unmittelbaren Verzählens des Hallsensors besteht insbesondere nach Abschaltung des Hallsensors (Sleep) und erneutem Einschalten des Hallsensors (Wake up), wenn temperatur- oder betriebsbedingt die Schaltschwellen verschoben sind und dadurch bedingt ein Impuls zu viel oder zu wenig gezählt wird.

Des Weiteren ist erkanntermaßen die Verzählwahrscheinlichkeit des Hallsensors bzw. des die Sensorimpulse zählenden Positionszählers und damit eine Positionsungenauigkeit des Verstellteils um so größer, je häufiger derartige Wake-up-und Sleep-Zyklen auftreten. Durch die Erfassung der Anzahl dieser Zyklen (Deaktivierungs- bzw. Aktivierungszyklen) steht somit eine systeminhärente Information für die Häufigkeit durchzuführender Normierungsfahrten zur Verfügung. Dabei sollten Normierungsfahrten umso häufiger durchgeführt werden, je häufiger derartige Deaktivierungs- bzw. Aktivierungszyklen des Hallsensors auftreten. Ebenso kann die Anzahl der Normierungsfahrten, beispielsweise gegenüber einer vorgegebenen Anzahl erforderlicher Normierungsfahrten, bei einer nur vergleichsweise geringen Anzahl von derartigen Deaktivierungszyklen des Hallsensors fahrzeugspezifisch reduziert werden, was den Verschleiß des Verstellsystems verringert und dessen Lebensdauer erhöht.

Vorzugsweise wird daher der Zähler für die Annäherungs- bzw. Normierungszyklen um einen Zählwert geändert, wenn bei einem Deaktivierungszyklus des Hallsensors ein Minimalwert des Zählers überschritten wird. Gegebenenfalls wird der Zähler geeigneterweise um den Zählwert verringert. Andernfalls erfolgt keine Verringerung des Zählers, jedoch vorzugsweise eine Abfrage, ob dieser den eingestellten bzw. vorgegebenen Zählerstand (Anfangszählwert) erreicht hat. Vorzugsweise erfolgt die Abfrage, ob der Zähler genau gleich null ist. Gegebenenfalls wird eine Normierfahrt durchgeführt, während andernfalls ein erneutes Deaktivierungs-und Aktivierungsereignis des Hallsensors erfasst und abgefragt wird. Parallel zur Änderung des Zählwertes in Abhängigkeit von der Anzahl der Aktivierungszyklen des Hallsensors wird der Zähler um einen Zählwert geändert, insbesondere verringert, wenn eine Annäherung des Verstellteils an oder eine Einfahrt in die Endposition erfasst wird.

Wurde eine Normierfahrt durchgeführt, so wird der Zähler auf den Start- bzw. Anfangswert oder auf einen paramentrierbaren neuen Maximalwert gesetzt, um anschließend erneut die Aktivierungs- bzw. Deaktivierungszyklen des Hallsensors sowie die Annäherungszyklen des Verstellteils an bzw. in die Endposition zu erfassen und zu zählen.

Bezüglich des Verstellsystems wird die Aufgabe erfindungsgemäß gelöst durch die Merkmale des Anspruchs 7. Vorteilhafte Ausgestaltungen sind Gegenstand der hierauf rückbezogenen Unteransprüche.

Dazu umfasst das Verstellsystem einen Hallsensor, der einem in Folge einer Motordrehung drehbewegten Magnetfeld, insbesondere einem motorwellenfesten Ringmagneten, ausgesetzt ist. Eine Steuereinrichtung, zweckmäßigerweise mit einem oder in Form eines Mikroprozessors steuert den Hallsensor zu dessen Deaktivierung und erneuter Aktivierung. Zudem steuert die Steuereinheit den Antrieb des Verstellteils für eine Anzahl von Annäherungen des Verstellteils an die Endposition an und initiiert gegebenenfalls eine Normierungsfahrt in die Endposition. Ein Zähler ändert sich bei jeder Annäherung des Verstellteils an die Endposition sowie in Abhängigkeit von der Anzahl der Aktivierungs- und Deaktivierungszyklen um jeweils einen Zählwert. Dabei erfasst die Steuereinrichtung jede Deaktivierung und anschließende Aktivierung des Hallsensors.

Die Steuereinrichtung steuert den Antrieb des Verstellteils in Abhängigkeit von mittels des Hallsensors erzeugten Zählimpulsen zum Verfahren des Verstellteils entlang eines Verstellweges zwischen zwei Endpositionen an. Die Steuereinheit weist hierzu einen Positionszähler auf, der die Sensorimpulse des Hallsensors auswertet und den Zähler zur Ermittlung der Normierungsfahrten um einen Zählwert ändert, wenn das Verstellteil in der Endposition ist. Die Aktivierung bzw. Deaktivierung des Hallsensors erfolgt dabei vorzugsweise in Abhängigkeit vom Status eines den Betriebszustand des Kraftfahrzeugs repräsentierenden Zustandssignals, beispielsweise in Abhängigkeit vom Ein- oder Ausschalten der Fahrzeugzündung und damit der Energieversorgung der Steuereinheit (Steuerelektronik), die ihrerseits den Hallsensors, beispielsweise über einen Treiber mit einer Konstantenspannungsschaltung steuert.

Nachfolgend werden Ausführungsbeispiele der Erfindung anhand einer Zeichnung näher erläutert. Darin zeigen:
- Fig. 1: schematisch ein Verstellsystem für ein motorisch angetriebenes Verstellteil zur Durchführung des Verfahrens, und
- Fig. 2: ein Ablaufdiagramm des erfindungsgemäßen Verfahrens.

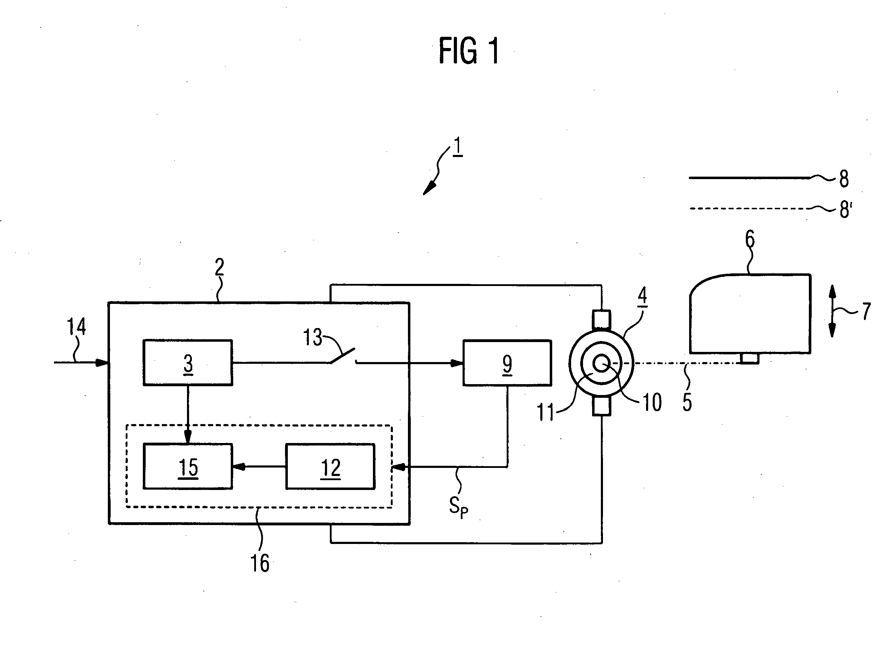

Fig. 1 zeigt schematisch ein auch als Antriebssystem bezeichnetes Verstellsystem 1, insbesondere eines Fensterhebers bzw. Fensterheberantriebs eines Kraftfahrzeugs. Das Verstellsystem 1 umfasst eine Steuereinheit 2 mit einem Mikroprozessor 3 für einen reversierbaren Elektromotor 4, der über ein strichpunktiert angedeutetes Getriebe 5 mit einem zu positionierenden Verstellteil 6, hier einer Fahrzeugscheibe, gekoppelt ist. Das zu positionierende Verstellteil 6 wird durch den Elektromotor 4 in zwei Richtungen entsprechend dem die Verstellrichtung 7 anzeigenden Doppelpfeil bis zu Endanschlägen in Endpositionen bewegt, von denen lediglich die Schließposition 8 angedeutet ist. In einem geringen Abstand vor der Endposition 8 befindet eine Stoppposition 8', an der das Verstellteil 6 durch die Steuereinheit 2 gestoppt wird. Die Stoppposition 8' ist dabei derart gewählt, dass das diese Position 8' erreichende Verstellteil 6 mittels des Elektromotors 4 zwar aktiv gestoppt wird, jedoch aufgrund der Massenträgheit des Systems praktisch antriebslos in die Endposition 8 sanft einfährt.

Dem Elektromotor 4 ist ein magnetfeldsensitiver Positionssensor 9 zugeordnet, der dem sich in Folge einer Motordrehung ändernden Magnetfeld eines auf der Motorwelle 10 wellenfest angeordneten Ringmagneten 11 ausgesetzt ist. Der Positionssensor 9 generiert ein impulsförmiges Sensorsignal S_{P}, dessen Impulsfolge der Steuereinheit 2 zur Auswertung der Position, der Bewegungsrichtung und/oder der Geschwindigkeit des Verstellteils 6 zugeführt wird. Ein Positionszähler 12 der Steuereinheit 2 zählt dabei die Sensorimpulse des Signal S_{P} des Positionssensors 9 in Abhängigkeit von der Bewegungsrichtung des Verstellteils 6 aufwärts bzw. abwärts. Jedem Zählwert des Positionszählers 12 ist somit eine bestimmte Position des Verstellteils 6 entlang dessen Verstellweges zwischen der (nicht dargestellten) Endposition (Offenposition) und der Endposition 8 (Schließposition) zugeordnet.

Als Positionssensor 9 ist vorzugsweise ein Hallsensor mit zwei zueinander beanstandeten Hallsonden in Form zweier sensitiver Flächen vorgesehen, die zusätzlich zu einer sensorinternen Auswerteelektronik, beispielsweise in ASIC-Technologie (application speficic intigrated circuit), in einen Halbleiterschipp (Hall-IC) integriert sind (DE 101 54 498 B4). In Anwesenheit des Magnetfeldes des Ringmagneten 11 senkrecht zu den sensitiven Flächen des Sensors 9 kann eine Hallspannung gemessen werden, die proportional zur magnetischen Flussdichte (Induktion) ist. Aufgrund dieser Proportionalität zwischen der Hallspannung und der magnetischen Flussdichte wird mittels des Sensors 9 eine Änderung der magnetischen Flussdichte (Magnetfeldänderung) erfasst, so dass die hierzu proportionale Hallspannungsänderung als Sensorsignal S_{P} ausgewertet werden kann.

In Abhängigkeit vom Abstand des Ringmagneten 11 zu den Hallflächen des Sensors 9 ergibt sich für die Hallspannung ein zumindest annähernd sinusförmiger Verlauf als Funktion des Umlaufwinkels. Überschreitet die relevante Feldkomponente der sich in Abhängigkeit vom Umlaufwinkel sinusförmigen Flussdichte (Hallspannung) eine obere Schaltschwelle, so ändert sich der Impuls innerhalb der Impulsfolge von einem ersten logischen Pegel auf einen zweiten logischen Pegel. Dieser Zustand bleibt so lange erhalten bis die relevante Feldkomponente der Flussdichte bzw. die Hallspannung eine untere Schaltschwelle unterschreitet.

Somit enthält die Pulsfolge des Sensorsignals S_{P} beispielsweise sowohl unterhalb der unteren Schwelle als auch innerhalb der zwischen den beiden Schaltschwellen sich befindenden Hysterese den High-Pegel (logisch 1) so lange bei, bis die obere Schaltschwelle erneut überschritten wird. Demzufolge bleibt in der Pulsfolge des Sensorsignals S_{P} der Low-Pegel (logisch 0) innerhalb der Hysterese erhalten, bis die untere Schaltschwelle erneut unterschritten wird. Die obere Schaltschwelle und die untere Schaltschwelle sind symmetrisch um die den Nulldurchgang des etwa sinusförmigen Verlaufs der magnetischen Flussdichte bzw. Hallspannung darstellende Mittellinie der Hysterese angeordnet. Die Zustandsdefinition, bei der ein Low-Pegel oberhalb der oberen Schaltschwelle und unterhalb dieser stets ein High-Pegel vorgegeben ist, ist bei einem CMOS-Hallsensor üblich.

Der Positions- bzw. Hallsensor 9 wird von der Steuereinheit 2 bzw. dessen Mikroprozessor 3 angesteuert, d.h. insbesondere ein- und ausgeschaltet und somit aktiviert bzw. deaktiviert. Dies ist durch den angedeuteten Schalter 13 symbolisiert. Diese Aktivierung bzw. Deaktivierung des Sensors 9 erfolgt in Abhängigkeit vom Betriebszustand des Kraftfahrzeugs. Wird beispielsweise die Zündung des Kraftfahrzeuges ausgeschaltet, so erkennt dies die Steuereinheit 2 bzw. der Mikroprozessor 3 anhand des Zustands eines Eingangssignals 14, beispielsweise an einer entsprechenden Anschlussklemme (Klemme 15) der eingesetzten Steuereinheit 2. Auch kann der Betriebszustand des Fahrzeugs über ein fahrzeuginternes Bussystem als Eingangssignal 14 der Steuereinheit 2 zugeführt werden.

Die Deaktivierung des Fahrzeugs führt über die Steuereinheit 2 zur Deaktivierung (Sleep) des Sensors 9. Analog erfolgt die Aktivierung (Wake up) des Sensors 9 bei erneuter Aktivierung des Fahrzeugs über die Steuereinheit 2. Diese Sleep-und Wake-up-Zyklen und somit die Anzahl der Deaktivierungen und anschließenden Aktivierungen des Sensors 9 initiieren einen Zähler 15, um dessen paramentrierten Startwert - also einen vorgegebenen Anfangszählwert - um einen Zählwert zu ändern, insbesondere zu dekrementieren. Hat der Zähler 15 einen bestimmten, wiederum paramentrierbaren Endzählwert erreicht, beispielsweise den Zählerstand null, so erfolgt bei der anschließenden Betätigung des Verstellsystems 1, d.h. im Ausführungsbeispiel des Fensterhebers, automatisch eine Normierungsfahrt, bei der der Elektromotor 4, gesteuert durch die Steuereinheit 2, nicht an der Stoppposition 8' gestoppt bzw. abgeschaltet wird. Vielmehr wird bei dieser Normierungsfahrt das Verstellteil 6 ohne Motorstopp in die Endposition 8 gefahren und anschließend der Positionszähler 12 auf dessen Startwert, beispielsweise auf den Zählwert null gesetzt. Hierdurch wird der Positionszähler 12 normiert, indem dessen aktueller Zählwert (Zählerstand) mit der tatsächlichen Endposition 8 des Verstellteils 6 nunmehr erneut synchronisiert ist. Hierdurch werden eventuelle Verzählfehler ausgeglichen bzw. korrigiert, die während der vorangegangenen Annäherungen des Verstellteils 6 an die Stoppposition 8' bzw. über diese hinaus in die Endposition 8 in Folge temperatur- oder betriebsbedingten Schwankungen der Hysterese-Schaltschwellen des Sensors 9 auftreten.

Der Anfangs- oder Normierungswert des Zählers 15 wird zudem bei jeder Annäherung des Verstellteils 6 an die Endposition 8 um einen Zählwert verringert. Hierdurch wird die Häufigkeit der Anfahrzyklen des Verstellteils 6 an bzw. in die Endposition 8 berücksichtigt, so dass auch in Folge der Anfahrtzyklen auftretende Verzählfehler, die sich in Abhängigkeit von der Anzahl der Annäherungszyklen kummulieren können, durch die dann entsprechend in Abhängigkeit von dieser Anzahl der Annäherungen mehr oder weniger häufigen Normierungsfahrten ausgeglichen werden, wobei der jeweilige Zählerstand des Positionszählers 12 korrigiert wird. Dabei können die Zähler 12 und 15 voneinander separiert oder ein einzelner Zähler 16 sein.

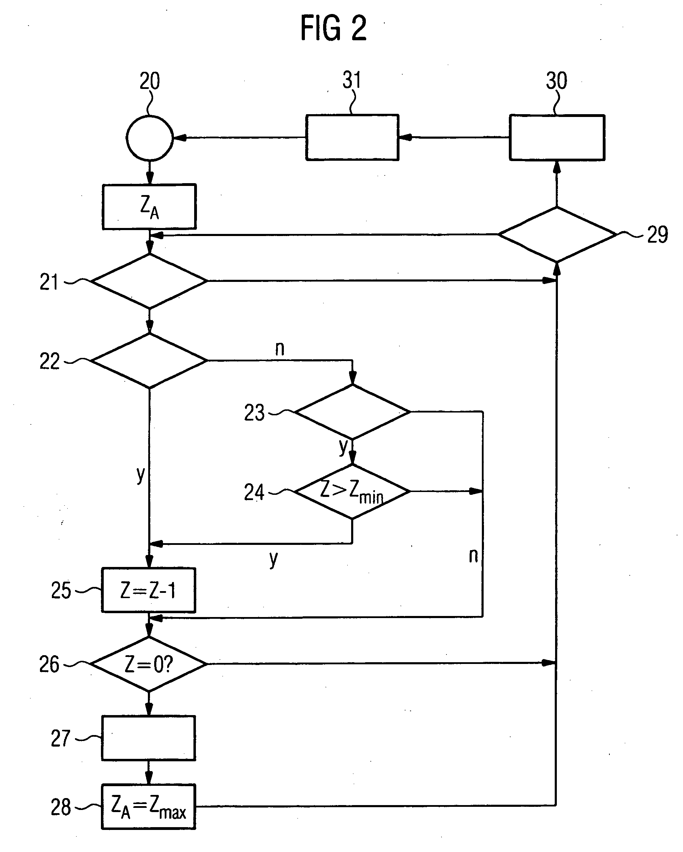

Der Ablauf des in der Steuereinheit 2 bzw. im Mikroprozessor 3 hinterlegten Algorithmus, nach dem das erfindungsgemäße Verfahren durchgeführt wird, ist in Fig. 2 in Form eines Flussdiagrammes (Ablaufdiagramm) veranschaulicht. Das dargestellte Flussdiagramm veranschaulicht dabei im Wesentlichen den Ablauf zur Initiierung einer Normierungsfahrt in Abhängigkeit von der erfassten Anzahl der Deaktivierungs- und Aktivierungszyklen des Sensors 9.

Erfolgt in Teilschritt 20 eine Aktivierung (Wake up) des Sensors 9 so wird zunächst der Zähler 15 geladen, d.h. mit dessen paramentrierten Anfangswert Z_{A} gesetzt. Der Anfangswert kann dabei beispielsweise fünfzig (50) Anfahrtzyklen des Verstellteils 6 in die Endposition 8 repräsentieren bzw. festlegen. Erfolgt im nächsten Teilschritt 21 eine Ansteuerung des Verstellteils 6, so wird im folgenden Teilschritt 22 abgefragt, ob es sich um einen Annäherungszyklus mit einem Anfahren des Verstellteils 6 in die Endposition 8 handelt. Gegebenenfalls wird der Zähler, d.h. dessen Anfangszählwert Z um einen Zählwert auf den Wert Z - 1 dekrementiert. Ist kein Einfahren in die Endposition 8 erfolgt, so erfolgt im Teilschritt 23 die Abfrage, ob zuvor eine Aktivierung (Wake up) des Sensors 9 erfolgt ist. Gegebenenfalls erfolgt im Teilschritt 25 eine Verringerung des Zählwertes Z des Zählers 15 um einen Zählwert.

Alternativ kann zuvor in einem Teilschritt 24 abgefragt werden, ob der Zählwert Z des Zählers 15 einen zuvor paramentrierten minimalen Zählwert Zₘᵢₙ überschreitet. Durch diesen Teilschritt 24 muss die entsprechende Bedingung Z > Zₘᵢₙ erfüllt sein, damit der Zähler 15 im Teilschritt 24 um einen Zählwert verringert wird. Andernfalls, d.h. wenn der Zähler den Minimalwert Zₘᵢₙ erreicht hat, erfolgt im Teilschritt 26 direkt die Abfrage, ob der Zähler bzw. der Zählwert Z genau gleich null ist. Andernfalls erfolgt diese Abfrage in Teilschritt 26, nachdem zuvor im Teilschritt 25 der Zähler um einen Zählwert verringert worden ist.

Ist der Zählwert oder Zählerstand Z = 0 erreicht, so wird im Teilschritt 27 eine Normierungsfahrt initiiert und anschließend im Teilschritt 28 der Zähler 15 erneut gesetzt. Dabei wird der Zähler 15 auf den ursprünglichen Anfangswert Z_{A} oder auf einen parametrierbaren Maximalwert Z_{A} = Zₘₐₓ gesetzt.

Ergibt die Abfrage im Teilschritt 26, dass der Zähler 15 ungleich null ist, so erfolgt im Teilschritt 29 die Abfrage, ob eine Deaktivierung (Sleep) des Sensors 9 angefordert oder erfolgt ist. Gegebenenfalls wird der aktuelle Zählerstand des Zählers 15 gespeichert und das Eintreten der Deaktivierung (Sleep) im Teilschritt 31 registriert. Eine im Anschluss an die Deaktivierung (Sleep) initiierte Aktivierung (Wake up) des Sensors 9 führt erneut zum Teilschritt 20, mit dem das Verfahren erneut abläuft und mit dem Laden bzw. Setzen des Zählers 15 beginnt.

### Bezugszeichenliste

- 1: Verstell-/Antriebssystem
- 2: Steuereinheit
- 3: Mikroprozessor
- 4: Elektromotor
- 5: Getriebe
- 6: Verstellteil/Fahrzeugscheibe
- 7: Verstellrichtung
- 8: Endposition
- 8': Stoppposition
- 9: Positions-/Hallsensor
- 10: Motorwelle
- 11: Ringmagnet
- 12: Positionszähler
- 13: Schalter
- 14: Eingangssignal
- 15,16: Zähler
- 20 bis 31: Teilschritt des Ablaufdiagramms

- S_{P}: Positionssignal

## Patentansprüche

1. Verfahren zur Bestimmung der Stellposition eines motorisch angetriebenen Verstellteils (6) eines Kraftfahrzeugs mittels eines Hallsensors (9), der in einem drehbewegten Magnetfeld angeordnet ist, wobei der Antrieb (4) des Verstellteils (6) für eine vorgegebene Anzahl von Annäherungen des Verstellteils (6) an eine Endposition (8) angesteuert wird, wobei ein Zähler (15) bei jeder Annäherung des Verstellteils (6) an die Endposition (8) um einen Zählwert geändert wird, und wobei bei Erreichen der vorgegebenen Anzahl der Annäherungen eine Normierungsfahrt in die Endposition (8) durchgeführt wird,
**dadurch gekennzeichnet,**
**dass** jede Deaktivierung und/oder Aktivierung des Hallsensors (9) erfasst und der Zählerstand des Zählers (15) in Abhängigkeit von der Anzahl der Deaktivierungs- und Aktivierungszyklen geändert wird.

2. Verfahren nach Anspruch 1,
**dadurch gekennzeichnet,**
**dass** der Zähler (15) um einen Zählwert geändert wird, wenn bei einem Deaktivierungs- und Aktivierungszyklus ein Minimalwert (Zₘᵢₙ) des Zählers (15) überschritten wird.

3. Verfahren nach Anspruch 1 oder 2,
**dadurch gekennzeichnet,**
**dass** bei jedem Deaktivierungs- und Aktivierungszyklus der Zähler (15) um einen Zählwert dekrementiert wird.

4. Verfahren nach einem der Ansprüche 1 bis 3,
**dadurch gekennzeichnet,**
**dass** der Hallsensor (9) in Abhängigkeit vom Betriebszustand des Kraftfahrzeugs deaktiviert bzw. aktiviert wird.

5. Verfahren nach einem der Ansprüche 1 bis 4,
**dadurch gekennzeichnet,**
**dass** bei Erreichen eines Zählerendstandes (Z = 0) eine Normierungsfahrt iniziiert wird.

6. Verfahren nach einem der Ansprüche 1 bis 5,
**dadurch gekennzeichnet,**
**dass** im Anschluss an eine Normierungsfahrt der Zähler (15) auf einen Maximalwert (Zₘₐₓ) gesetzt wird.

7. Verstellsystem (1) für ein motorisch angetriebenes Verstellteil (6) eines Kraftfahrzeugs, insbesondere zur Durchführung des Verfahrens nach einem der Ansprüche 1 bis 6,
- mit einem Hallsensors (9), der einem infolge einer Motordrehung drehbewegten Magnetfeld, insbesondere eines motorwellenfesten Ringmagneten, ausgesetzt ist,
- mit einer Steuereinheit (2), die den Hallsensor (9) zu dessen Deaktivierung und erneuter Aktivierung steuert und den Antrieb (4) des Verstellteils (6) für eine Anzahl von Annäherungen des Verstellteils (6) an eine Endposition (8) sowie anschließend für eine Normierungsfahrt in die Endposition (8) ansteuert, und
- mit einem Zähler (15), der sich bei jeder Annäherungen des Verstellteils (6) an die Endposition (8) um einen Zählwert ändert,
**dadurch gekennzeichnet,**
- **dass** die Steuereinheit (2) jede Deaktivierung und anschließende Aktivierung des Hallsensors (9) erfasst, und
- **dass** der Zähler (15) den Zählerstand in Abhängigkeit von der Anzahl der Aktivierungs- und Deaktivierungszyklen ändert.

8. Verstellsystem (1) nach Anspruch 7,
**dadurch gekennzeichnet,**
**dass** die Steuereinheit (2) den Antrieb (4) des Verstellteils (6) in Abhängigkeit von mittels des Hallsensors (9) erzeugten Zählimpulsen (S_{P}) zum Verfahren des Verstellteils (6) entlang eines Verstellweges (7) zwischen zwei Endpositionen (8) ansteuert.

9. Verstellsystem (1) nach Anspruch 7 oder 8,
durch gekennzeichnet,
dass die Steuereinheit (2) einen Positionszähler (12) aufweist, der die Sensorimpulse (S_{P}) des Hallsensors (9) auswertet und den Zähler (15) um einen Zählwert ändert, wenn das Verstellteil (6) in der Endposition (8) ist.

10. Verstellsystem (1) nach einem der Ansprüche 7 bis 9,
durch gekennzeichnet,
dass die Steuereinheit (2) den Hallsensor (9) in Abhängigkeit vom Status eines den Betriebszustand des Kraftfahrzeugs repräsentierenden Zustandssignals (14) deaktiviert bzw. aktiviert.

## Claims

1. Method for determining the set position of a motor-driven adjustment part (6) of a motor vehicle by means of a Hall effect sensor (9), which is arranged in a rotated magnetic field, wherein the drive (4) of the adjustment part (6) is activated for a predetermined number of approaches of the adjustment part (6) towards an end position (8), wherein a counter (15) is changed by a counting value upon each approach of the adjustment part (6) towards the end position (8), and wherein, when the predetermined number of approaches has been reached, a standardisation run to the end position (8) is carried out,
**characterised in that**,
each deactivation and/or activation of the Hall effect sensor (9) is detected and the counter state of the counter (15) is altered depending on the number of deactivation and activation cycles.

2. Method according to claim 1,
**characterised in that**,
the counter (15) is changed by a counting value when a minimum value (Zₘᵢₙ) of the counter (15) is exceeded during a deactivation and activation cycle.

3. Method according to claim 1 or 2,
**characterised in that**,
the counter (15) is decremented by a counting value during each deactivation and activation cycle.

4. Method according to one of claims 1 to 3,
**characterised in that**,
the Hall effect sensor (9) is deactivated or activated depending on the operating status of the motor vehicle.

5. Method according to one of claims 1 to 4,
**characterised in that**,
a standardisation run is initiated when a counter end state (Z=0) has been reached.

6. Method according to one of claims 1 to 5,
**characterised in that**,
the counter (15) is set to a maximum value (Zₘₐₓ) after a standardisation run.

7. Adjustment system (1) for a motor-driven adjustment part (6) of a motor vehicle, in particular to carry out the method according to one of claims 1 to 6,
- having a Hall effect sensor (9), which is exposed to a rotated magnetic field as a consequence of an engine rotation, in particular of an annular magnet fixed to a motor shaft,
- having a control unit (2), which controls the Hall effect sensor (9) for its deactivation and reactivation, and activates the drive (4) of the adjustment part (6) for a number of approaches of the adjustment part (6) towards an end position (8), as well as subsequently for a standardisation run to the end position (8), and
- having a counter (15), which changes by a counting value during each approach of the adjustment part (6) to the end position (8),
**characterised in that**,
- the control unit (2) detects each deactivation and subsequent activation of the Hall effect sensor (9), and
- the counter (15) changes the counter state depending on the number of activation and deactivation cycles.

8. Adjustment system (1) according to claim 7, **characterised in that**,
the control unit (2) activates the drive (4) of the adjustment part (6) depending on counting pulses (S_{P}) generated by means of the Hall effect sensor (9) in order to move the adjustment part (6) along an adjustment path (7) between two end positions (8).

9. Adjustment system (1) according to claim 7 or 8,
**characterised in that**,
the control unit (2) has a position counter (12) that evaluates the sensor pulses (S_{P}) of the Hall effect sensor (9) and changes the counter (15) by a counting value when the adjustment part (6) is in the end position (8).

10. Adjustment system (1) according to one of claims 7 to 9,
**characterised in that**,
the control unit (2) deactivates or activates the Hall effect sensor (9) depending on the status of a status signal (14) representing the operating status of the motor vehicle.

## Revendications

1. Procédé pour déterminer la position de réglage d'une pièce réglable (6) d'un véhicule automobile, qui est entraînée par moteur, au moyen d'un détecteur de Hall (9) agencé dans un champ magnétique déplacé en rotation, procédé
d'après lequel on commande l'entraînement (4) de la pièce réglable (6) pour un nombre prédéterminé d'approches de la pièce réglable (6) d'une position extrême (8),
d'après lequel on modifie, d'une valeur de comptage, un compteur (15) lors de chaque approche de la pièce réglable (6) de la position extrême (8),
et d'après lequel, lorsque le nombre prédéterminé des approches est atteint, on effectue un déplacement normatif à la position extrême (8),
**caractérisé**
**en ce que** l'on relève chaque désactivation et/ou activation du détecteur de Hall (9), et on modifie l'état de comptage du compteur (15) en fonction du nombre de cycles de désactivation et d'activation.

2. Procédé selon la revendication 1,
**caractérisé**
**en ce que** l'on modifie d'une valeur de comptage le compteur (15) lorsque, lors d'un cycle de désactivation et d'activation, on dépasse une valeur minimale (Zₘᵢₙ) du compteur (15).

3. Procédé selon la revendication 1 ou la revendication 2,
**caractérisé**
**en ce qu'**à chaque cycle de désactivation et d'activation, le compteur (15) est décrémenté d'une valeur de comptage.

4. Procédé selon l'une des revendications 1 à 3,
**caractérisé**
**en ce que** le détecteur de Hall (9) est désactivé, respectivement activé, en fonction de l'état de marche du véhicule automobile.

5. Procédé selon l'une des revendications 1 à 4,
**caractérisé**
**en ce que** lorsque l'on atteint un état de comptage extrême (Z=0), on initie un déplacement normatif.

6. Procédé selon l'une des revendications 1 à 5,
**caractérisé**
**en ce qu'**à la suite d'un déplacement normatif, on met le compteur (15) à une valeur maximale (Zₘₐₓ).

7. Système de réglage (1) pour une pièce réglable (6) d'un véhicule automobile, entraînée par moteur, notamment pour la mise en oeuvre du procédé selon l'une des revendications 1 à 6,
- comprenant un détecteur de Hall (9), qui est exposé à un champ magnétique déplacé en rotation sous l'effet d'une rotation de moteur, notamment d'un aimant annulaire fixe avec l'arbre de moteur,
- comprenant une unité de commande (2), qui commande le détecteur de Hall (9) pour sa désactivation et nouvelle activation, et commande l'entraînement (4) de la pièce réglable (6) pour un certain nombre d'approches de la pièce réglable (6) d'une position extrême (8), et ensuite pour un déplacement normatif à la position extrême (8), et
- comprenant un compteur (15), qui varie d'une valeur de comptage à chaque approche de la pièce réglable (6) de la position extrême (8),
**caractérisé**
- **en ce que** l'unité de commande (2) relève chaque désactivation et activation qui suit, du détecteur de Hall (9), et
- **en ce que** le compteur (15) modifie son état de comptage en fonction du nombre de cycles de désactivation et d'activation.

8. Système de réglage (1) selon la revendication 7,
**caractérisé**
**en ce que** l'unité de commande (2) commande l'entraînement (4) de la pièce réglable (6), en fonction d'impulsions de comptage (Sₚ) produites au moyen du détecteur de Hall (9), pour déplacer la pièce réglable (6) le long d'un parcours de réglage (7) entre deux positions extrêmes (8).

9. Système de réglage (1) selon la revendication 7 ou la revendication 8,
**caractérisé**
**en ce que** l'unité de commande (2) comprend un compteur de position (12), qui traite les impulsions de détecteur (Sₚ) du détecteur de Hall (9), et modifie le compteur (15) lorsque la pièce réglable (6) est dans la position extrême (8).

10. Système de réglage (1) selon l'une des revendications 7 à 9,
**caractérisé**
**en ce que** l'unité de commande (2) désactive, respectivement active le détecteur de Hall (9) en fonction du statut d'un signal d'état (14) représentant l'état de marche du véhicule automobile.
